# EUROPÄISCHE PATENTSCHRIFT

(11) **EP 2 886 899 B1**
(45) Veröffentlichungstag und Bekanntmachung des Hinweises auf die Patenterteilung: **13.12.2017**
(21) Anmeldenummer: 14186206.0
(22) Anmeldetag: 24.09.2014
(51) Int. Cl.: F16D 25/08

(54) **Ausrücksystem, insbesondere deckelfester Ausrücker**
Release system, in particular fixed cover shifter
Système de débrayage, en particulier débrayage à chapeau fixe

(30) Priorität: 26.09.2013 DE 102013219354
(43) Veröffentlichungstag der Anmeldung: 24.06.2015
(73) Patentinhaber: Schaeffler Technologies AG & Co. KG, 91074 Herzogenaurach (DE)
(72) Erfinder: Ortmann, Simon, 77866 Rheinau-Linx (DE)

(56) Entgegenhaltungen:
- EP-A1- 2 172 667
- EP-A2- 1 464 862
- DE-A1-102014 212 193
- FR-A1- 2 757 590
- FR-A1- 2 789 140

## Beschreibung

Die Erfindung betrifft ein Ausrücksystem, welches insbesondere in Form eines deckelfesten Ausrückers ausgebildet ist.

Ausrückvorrichtungen für Kupplungen im Antriebsstrang eines Kraftfahrzeugs sind im Stand der Technik in vielfältiger Ausführung bekannt. In den letzten Jahren sind jeweils zunehmend sogenannte konzentrische Nehmerzylinder zum Einsatz gekommen, bei denen ein Gehäuse konzentrisch um eine Welle, beispielsweise die Getriebeeingangswelle, angeordnet ist und einen
ringförmigen Druckraum bildet, in dem ein ringförmiger Kolben axial verlagerbar angeordnet ist. Der Kolben trägt auf seinem Druckraum abgewandten Ende ein Ausrücklager, das an der Teller- oder Hebelfeder einer Kupplung anliegt. Durch Anpressen von hydraulischen Fluid in den Druckraum wird der Kolben dann aus dem Druckraum hinausbewegt und betätigt die Teller- bzw. Hebelfeder der Kupplung.
Eine besondere Ausführungsform der konzentrischen Nehmerzylinder sind sogenannte deckelfeste Ausrücker, bei dem das Nehmerzylindergehäuse über ein Deckellager axial und radial am Deckel der Kupplung festgelegt ist. Da sich der Kupplungsdeckel mit der Kupplung mitdreht, ist dieses Deckellager nötig, um das Ausrückergehäuse drehfest lagern zu können. Da aber über ein Drehlager immer auch ein Schleppmoment übertragen wird, greift an den Ausrückergehäuse bei Betrieb des Antriebsstrangs immer ein Drehmoment an, das in ein feststehendes Bauteil, beispielsweise die Getriebeglocke, abgeleitet werden muss. Hierzu ist es im Stand der Technik häufig vorgesehen, in der Getriebeglocke ein entsprechendes Abstützungselement vorzusehen, das die Fluidleitung zum Gehäuse in tangentialer Richtung bezüglich der Achse abstützt.

Derartige Ausrücksysteme verfügen oft über einen begrenzten axialen Bauraum und weisen am Innendurchmesser eine mit dem Gehäuse verbundene Führungshülse auf, die dann eine Abdichtung zwischen Gehäuse und Führungshülse erfordert.

Bekannt sind z.B. Systeme, bei denen Führungshülse und Gehäuse axial abgedichtet sind. Oder es sind radiale Abdichtungen bekannt, wie. z.B. bei WO 2011/091783 A1. Hierbei wird allerdings kein Kunststoffgehäuse verwendet, somit ist die O-Ringhaltegeometrie spanend einfach herzustellen. Aus der Druckschrift EP 1 464 862 A2 ist weiterhin ein Ausrücksystem gemäß des Oberbegriffs des Patentanspruchs 1 bekannt.

Bei der Verwendung einer Führungshülse und einem mit diesem verbundenen Gehäuse entsteht eine hohe Kraft in axialer Richtung, die die Führungshülse und das Gehäuse voneinander trennen will. Diese Kraft muss abgefangen werden, was bei einem deckelfesten System mit einem Kunststoffgehäuse einen hohen Aufwand bei den dafür verwendeten bekannten Abdichtungen erforderlich macht, die in einer radialen Nut sitzen, wodurch ein erhöhter fertigungstechnischer Aufwand bei erhöhten Fertigungskosten zu verzeichnen ist, da bei einem Kunststoffgehäuse die Nut durch ein radial zustellbares Einlegeteil der Vorrichtung ausgebildet wird, welches in radialer Richtung entformt werden muss.

Aufgabe der Erfindung ist es, eine Abdichtung zwischen Führungshülse und Gehäuse bei einem deckelfesten Ausrücker zu entwickeln, der kostengünstig und einfach herstellbar ist und hohen Axialbelastungen stand hält.

Diese Aufgabe wird mit den kennzeichnenden Merkmalen des ersten Patentanspruchs gelöst. Vorteilhafte Ausgestaltungen ergeben sich aus den Unteransprüchen.

Das Ausrücksystem ist insbesondere für einen deckelfesten Ausrücker zur Betätigung einer Reibungskupplung eines Kraftfahrzeuges vorgesehen und umfasst ein Gehäuse, welches mit einer radial innen angeordneten Führungshülse einen ringförmigen Druckraum bildet, zu dem durch das Gehäuse eine Zulaufbohrung führt, wobei in dem Druckraum ein druckmittelbetätigter Kolben axial beweglich gelagert ist, der mit einem Ausrücklager wirkverbunden ist, welches eine Tellerfeder der Reibungskupplung in axialer Richtung mit einer Kraft beaufschlagt, wobei zwischen dem Gehäuse und der Führungshülse eine radial abdichtende Dichtung in einer Ringnut angeordnet ist und ein erster Teil der Ringnut vom Gehäuse und ein zweiter Teil der Ringnut durch ein Unterstützungsbauteil realisiert wird.

Durch das Aufteilen der Nutgeometrie ist keine aufwändige Nut mit speziellen Kernen im Spritzgusswerkzeug für das Gehäuse mehr erforderlich, denn die Nut wird von einem Gehäuseabsatz zusammen mit dem Unterstützungsbauteil gebildet. Dadurch sind nun ein einfaches Entformen und eine kostengünstigere Fertigung des Gehäuses möglich.
Die Ringnut ist bekannter Weise U-förmig ausgebildet und weist zwei zueinander im Wesentlichen parallele Wandbereiche auf, die sich radial erstrecken und zwischen denen ein sich axial erstreckender Bodenbereich angeordnet ist, wobei ein erster Wandbereich und der Bodenbereich vom Gehäuse und ein zweiter Wandbereich vom Unterstützungsbauteil gebildet wird. Das Gehäuse und das Unterstützungsbauteil sind bevorzugt beide aus Kunststoff gefertigt, wobei gleiche oder unterschiedliche Materialien Anwendung finden.

Das Unterstützungsbauteil ist vorzugsweise an dem vom Ausrücklager abgewandten Ende zwischen der Führungshülse und dem Gehäuse angeordnet und wird wahlweise über eine formschlüssige oder eine kraftschlüssige oder eine stoffschlüssige Verbindung mit dem Gehäuse oder mit der Führungshülse verbunden oder an das Gehäuse angespritzt.

Dabei ist beispielsweise die formschlüssige Verbindung als eine Clipsverbindung, die kraftschlüssige Verbindung als eine Presspassung und die stoffschlüssige Verbindung als eine Ultraschallschweißverbindung ausgebildet.

Für die Befestigung des Unterstützungsbauteils müssen die Durchmesser entsprechend ausgelegt werden, damit an der Dichtung, die bevorzugt als O-Ring ausgebildet ist, keine Spaltextrusion auftreten kann.

In dem längeren sich axial erstreckenden Bereich des Gehäuses führt mit dem Bereich der Ringnut überlappend die Zulaufbohrung zu dem Druckraum des Gehäuses. Die entstandene Geometrie, und der damit längere axiale Bauraum kann dadurch gleichzeitig genutzt werden, um die Zulaufbohrung in den Druckraum des Zylinders aufzunehmen.

Mit der beschriebenen Lösung wird somit bevorzugt der vom Ausrücklager abgewandte Anschlag der Dichtungsnut/Nut in Richtung zum Boden der Führungshülse durch ein zusätzliches Kunststoffbauteil in Form des Unterstützungsbauteils realisiert. Die Herstellung dieses Bauteils und dessen Verbindung mit dem Gehäuse ist insgesamt kostengünstiger als die Verwendung eines Spritzgießwerkzeuges für das Gehäuse, welches entsprechende Kerne für die Nut erfordert, die nach dem Herstellungsprozess nach radial innen entformt werden müssen, um das anschließende axiale Entformen des Gehäuses zu ermöglichen. Eine Gehäusegeometrie, die lediglich die halbe Ausprägung einer O-Ringnut übernimmt, ermöglicht ein nur axiales Entformen, wodurch die Fertigungskosten drastisch reduziert werden können. An dieser Geometrie kann sich auch vorteilhafterweise der Anspritzpunkt des Bauteiles befinden.

Die radiale Abstützung erfolgt somit erstmalig über einen O-Ring oder ähnliches Dichtelement, Gehäuse und Unterstützungsbauteil sowie Führungshülse.

Im weiteren kann hier die Zulaufbohrung von Leitung zum Druckraum, in der entstandenen Geometrie versteckt werden, was dazu führt, dass kein Bauraum verschwendet wird, und gewährleistet, dass die Dichtung niemals über die Kanten der Zulaufbohrung laufen kann, was zum Zerstören der Dichtung führen würde.

Die Erfindung wird nachfolgend anhand eines Ausführungsbeispiels und zugehöriger Zeichnungen näher erläutert.

Es zeigen:
Figur 1 einen Teillängsschnitt des Ausrücksystems,
Figur 2 eine dreidimensionale Einzeldarstellung des Gehäuses.

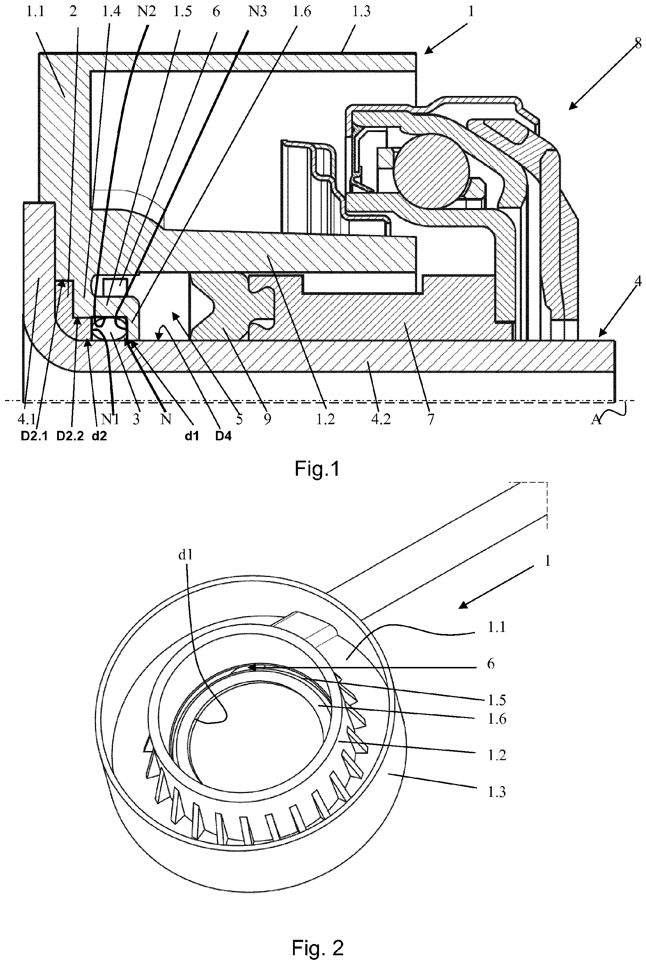

In Figur 1 ist ein Teillängsschnitt des Ausrücksystems dargestellt. Das Gehäuse 1 weist einen Boden 1.1 und eine sich entlang der Längsachse A erstreckende innere Wand 1.2 und eine dazu beabstandete sich axial erstreckende äußere Wand 1.3 auf. Von Boden 1.1 und der inneren Wand 1.1 aus erstrecken sich axial und radial nach innen stufenförmig ein erster Bund 1.4, axial vom Boden weg ein Wandbereich 1.5 und radial nach innen ein zweiter Bund 1.6.

An dem Eckbereich, der im Bereich des ersten Bundes 1.4 ausgebildet ist, liegt ein winkelförmiges Unterstützungsbauteil 2 an, welches mit dem Gehäuse 1 verbunden ist und gemeinsam mit dem Gehäuse die Nut N bildet, in welcher ein O-Ring 3 sitzt.

Das Unterstützungsbauteil 2 weist eine Stirnseite auf, die vom Boden 1.1 des Gehäuses 2 wegweist und einen sich radial erstreckenden ersten Wandbereich N1 der Nut N bildet, daran schließt sich ein sich axial erstreckender Bodenbereich N2 der Nut N an, der an dem Wandbereich 1.5 des Gehäuses 1 radial innen ausgebildet ist und daran grenzt ein sich radial erstreckender zweiter Wandbereich N3 der Nut N, der an dem zweiten Bund 1.6 ausgebildet und im Wesentlichen parallel zum ersten Wandbereich N1 ausgerichtet ist.

Der Bund 1.6 weist einen Innendurchmesser d1 auf und das Unterstützungsbauteil 2 einen Innendurchmesser d2, die im Wesentlichen gleich sind.

Das Unterstützungsbauteil 2 weist zwei unterschiedliche Außendurchmesser D2.1 und D2.2 auf, die mit nicht bezeichneten Innendurchmessern des Gehäuses 1 korrespondieren, die durch den axial und radial abgesetzten Bund 1.4 und den sich axial erstreckenden Wandbereich 1.5 gebildet werden.

Radial innen von der inneren Wand 1.2 des Gehäuses 1 beabstandet, ist eine Führungshülse 4 angeordnet, die mit einem nach außen weisenden Flansch 4.1 am Boden 1.1 des Gehäuses 1 befestigt ist und deren axialer Wandbereich 4.2 sich entlang der Längsachse A erstreckt. Die Führungshülse 4 grenzt an das Unterstützungsbauteil 2 an, wobei der Außendurchmesser D4 des Wandbereiches 4.2 der Führungshülse im Wesentlichen den Innendurchmessern d1 des Gehäuses 1 und d2 der Führungshülse 2 angepasst ist.

Das Gehäuse 1 bildet mit seiner inneren Wand 1.1 und dem davon beabstandeten Wandbereich 4.2 der Führungshülse 4 einen ringförmigen Druckraum 5, zu dem durch das Gehäuse 1 eine Zulaufbohrung 6 im Bereich zwischen dem äußeren Wandbereich 1.3 und dem Wandbereich 1.5 führt, wobei in dem Druckraum 5 ein druckmittelbetätigter Kolben 7 axial beweglich gelagert ist, der mit einem Ausrücklager 8 wirkverbunden ist, welches eine nicht dargestellte Tellerfeder der Reibungskupplung (ebenfalls nicht dargestellt) in axialer Richtung mit einer Kraft beaufschlagt. An dem Kolben 8 ist in Richtung zum Druckraum eine ringförmige Kolbendichtung 9 angeordnet, die radial innen zur Führungshülse 4 und radial außen zum Gehäuse 1 abdichtet.

Die Zulaufbohrung 6 mündet im Wesentlichen in axialer Richtung in der Höhe des O-Rings 3, jedoch zu diesem radial nach außen versetzt in den Druckraum 5.

Der O-Ring 3 liegt somit erstmalig zwischen Gehäuse 1, Unterstützungsbauteil 2 und Führungshülse 3.

Das Unterstützungsbauteil verfügt, wie vorgenannt beschrieben, über 3 genau abgestimmte Durchmesser D2.1, D2.2 und d2, wobei zwei Durchmesser für Spaltextrusion der Dichtung/des O-Rings 3 wichtig sind (D2.2 und d2) und ein Durchmesser (D2.1) als Kontaktdurchmesser oder Pressverbindung zum Gehäuse 1 dient. Dieses Unterstützungsbauteil 2 kann aus einem minderwertigen Kunststoff gefertigt sein oder aus dem gleichen Kunststoff, aus dem das Gehäuse 1 besteht.

Durch die neue Gestaltung des Gehäuses kann dieses nun einfacher gefertigt werden, gleichzeitig werden negative Einflüsse einer axialen Anbindung umgangen. Der entstandene Bauraum wird für die Zulaufbohrung genutzt.

Es braucht keine aufwändige Nut mit speziellen Kernen im Spritzgusswerkzeug für das Gehäuse 1 vorgesehen werden, denn die Nut N wird von einem Gehäuseabsatz (hier 1.5 und 1.6) zusammen mit dem Unterstützungsbauteil 2 gebildet, wodurch die Geometrie der O-RingNut N aufgetrennt wird.

An dieser Geometrie der Nut N, die am Gehäuse 1 ausgebildet ist, kann sich auch vorteilhafterweise der Anspritzpunkt des Gehäuses befinden. Bevorzugt befindet sich der Anspritzpunkt im Bereich des Bundes 1.6, so dass das Entformen des Gehäuses 1 nur in axialer Richtung erfolgt und keine radialen Einlegeteile erforderlich sind.

Aus Figur 1 ist das Gehäuse 1 ersichtlich, welches einen Boden 1.1, eine sich axial erstreckende innere Wand 1.2 und eine radial nach innen dazu beabstandete sich axial erstreckende äußere Wand 1.3 aufweist. Von Boden 1.1 und der inneren Wand 1.1 aus erstrecken sich axial und radial nach innen stufenförmig ein erster Bund 1.4, axial vom Boden weg ein Wandbereich 1.5 und radial nach innen ein zweiter Bund 1., an dessen Innendurchmesser d1 im montierten Zustand die Führungshülse angrenzt.

Es ist ersichtlich, dass die Zulaufbohrung 6 im Bereich zwischen dem äußeren Wandbereich 1.3 und dem Wandbereich 1.5 in das Gehäuse 1 eingebracht ist. Dadurch wird gewährleistet, dass die Dichtung, Kolbendichtung (hier nicht dargestellt) niemals über die Kanten der Zulaufbohrung 6 laufen kann was zum Zerstören der Dichtung, Kolbendichtung führen würde.

### Bezugszeichenliste

- 1: Gehäuse
- 1.1: Boden
- 1.2: innere Wand
- 1.3: äußere Wand
- 1.4: erster Bund
- 1.5: Wandbereich
- 1.6: zweiter Bund
- 2: Unterstützungsbauteil
- 3: O-Ring
- 4: Führungshülse
- 4.1: Flansch
- 4.2: axialer Wandbereich
- 5: Druckraum
- 6: Zulaufbohrung
- 7: Kolben
- 8: Ausrücklager 8
- 9: Kolbendichtung
- A: Längsachse
- d1: Innendurchmesser des zweiten Bundes 1.6
- d2: Innendurchmesser des Unterstützungsbauteils 2
- D2.1, D2.2: Außendurchmesser des Unterstützungsbauteils 2
- D4: Außendurchmesser des Wandbereiches 4.2 der Führungshülse
- N: Nut
- N1: erster Wandbereich der Nut
- N2: Bodenbereich der Nut
- N3: zweiter Wandbereich der Nut

## Patentansprüche

1. Ausrücksystem, insbesondere deckelfester Ausrücker zur Betätigung einer Reibungskupplung eines Kraftfahrzeuges, umfassend ein Gehäuse (1), welches mit einer radial innen angeordneten Führungshülse (2) einen ringförmigen Druckraum (5) bildet, zu dem durch das Gehäuse (1) eine Zulaufbohrung (6) führt, wobei in dem Druckraum (5) ein druckmittelbetätigter Kolben (7) axial beweglich gelagert ist, der mit einem Ausrücklager (8) wirkverbunden ist, welches eine Tellerfeder der Reibungskupplung in axialer Richtung mit einer Kraft beaufschlagt, wobei zwischen dem Gehäuse (1) und der Führungshülse (4) eine Dichtung in einer ringförmigen Nut (N) angeordnet ist, wobei ein erster Teil der Nut (N) vom Gehäuse (1) und ein zweiter Teil der Nut (N) durch ein Unterstützungsbauteil (2) realisiert wird, **dadurch gekennzeichnet, dass** die Nut (N) U-förmig ausgebildet ist und zwei zueinander im Wesentlichen parallele Wandbereiche (N1, N3) aufweist, die sich radial erstrecken und zwischen denen sich ein sich axial erstreckender Bodenbereich (N2) angeordnet ist, wobei ein erster Wandbereich (N1) vom Unterstützungsbauteil (2) und der Bodenbereich (N2) und ein zweiter Wandbereich(N3) vom Gehäuse (1) gebildet wird.

2. Ausrücksystem nach Anspruch 1, **dadurch gekennzeichnet, dass** das Gehäuse (1) und das Unterstützungsbauteil (2) aus Kunststoff gefertigt sind.

3. Ausrücksystem nach einem der Ansprüche 1 oder 2, **dadurch gekennzeichnet, dass** das Unterstützungsbauteil (2) an dem vom Ausrücklager (8) abgewandten Ende zwischen der Führungshülse (4) und dem Gehäuse (1) angeordnet ist.

4. Ausrücksystem nach einem der Ansprüche 1 bis 3, **dadurch gekennzeichnet, dass** das Unterstützungsbauteil (2) über eine formschlüssige oder eine kraftschlüssige oder eine stoffschlüssige Verbindung mit dem Gehäuse (1) oder mit der Führungshülse (4) verbunden ist oder an das Gehäuse (1) angespritzt ist.

5. Ausrücksystem nach Anspruch 4, **dadurch gekennzeichnet, dass** die formschlüssige Verbindung als eine Clipsverbindung, die kraftschlüssige Verbindung als eine Presspassung und die stoffschlüssige Verbindung als eine Ultraschallschweißverbindung ausgebildet ist.

6. Ausrücksystem nach einem der Ansprüche 1 bis 5, **dadurch gekennzeichnet, dass** mit dem sich axial erstreckenden Bodenbereich (N2) der Nut (N) dazu radial innen überlappend die Zulaufbohrung (6) zu dem Druckraum (5) des Gehäuses (1) führt.

7. Ausrücksystem nach einem der vorangehenden Ansprüche, **dadurch gekennzeichnet, dass** das Unterstützungsbauteil (2) winkelförmig ist.

8. Ausrücksystem nach einem der vorangehenden Ansprüche, **dadurch gekennzeichnet, dass** das Unterstützungsbauteil (2) zwei unterschiedliche Außendurchmesser (D2.1, D2.2) aufweist, die mit Innendurchmessern des Gehäuses (1) korrespondieren.

9. Ausrücksystem nach einem der vorangehenden Ansprüche, **dadurch gekennzeichnet, dass** die Dichtung (3) ein O-Ring ist.

10. Ausrücksystem nach Anspruch 9, **dadurch gekennzeichnet, dass** die Zulaufbohrung (6) in axialer Richtung in der Höhe des O-Rings (3) und zu diesem radial nach außen versetzt in den Druckraum (5) mündet.

## Claims

1. Clutch release system, in particular cover-fixed clutch operator for actuating a friction clutch of a motor vehicle, comprising a housing (1) which, together with a guide sleeve (2) which is arranged radially on the inside, forms an annular pressure space (5), to which a feed bore (6) leads through the housing (1), a piston (7) which can be actuated by pressure medium being mounted axially movably in the pressure space (5), which piston (7) is operatively connected to a clutch release bearing (8) which loads a cup spring of the friction clutch with a force in the axial direction, a seal being arranged in an annular groove (N) between the housing (1) and the guide sleeve (4), a first part of the groove (N) being realized by the housing (1), and a second part of the groove (N) being realized by a support component (2), **characterized in that** the groove (N) is of U-shaped configuration and has two wall regions (N1, N3) which are substantially parallel to one another, extend radially, and between which an axially extending bottom region (N2) is arranged, a first wall region (N1) being formed by the support component (2), and the bottom region (N2) and a second wall region (N3) being formed by the housing (1).

2. Clutch release system according to Claim 1, **characterized in that** the housing (1) and the support component (2) are manufactured from plastic.

3. Clutch release system according to either of Claims 1 and 2, **characterized in that**, at the end which faces away from the clutch release bearing (8), the support component (2) is arranged between the guide sleeve (4) and the housing (1).

4. Clutch release system according to one of Claims 1 to 3, **characterized in that** the support component (2) is connected via a positively locking or a non-positive or an integrally joined connection to the housing (1) or to the guide sleeve (4), or is moulded onto the housing (1).

5. Clutch release system according to Claim 4, **characterized in that** the positively locking connection is configured as a clipped connection, the non-positive connection is configured as an interference fit, and the integrally joined connection is configured as an ultrasonically welded connection.

6. Clutch release system according to one of Claims 1 to 5, **characterized in that**, in a manner which overlaps with the axially extending bottom region (N2) of the groove (N) radially on the inside with respect thereto, the feed bore (6) leads to the pressure space (5) of the housing (1).

7. Clutch release system according to one of the preceding claims, **characterized in that** the support component (2) is angled.

8. Clutch release system according to one of the preceding claims, **characterized in that** the support component (2) has two different external diameters (D2.1, D2.2) which correspond with internal diameters of the housing (1).

9. Clutch release system according to one of the preceding claims, **characterized in that** the seal (3) is an O-ring.

10. Clutch release system according to Claim 9, **characterized in that** the feed bore (6) opens into the pressure space (5) in the axial direction at the level of the O-ring (3) and offset radially to the outside with respect to the latter.

## Revendications

1. Système de débrayage, en particulier dispositif de débrayage fixé au couvercle pour l'actionnement d'un embrayage à friction d'un véhicule automobile, comprenant un boîtier (1) qui forme, avec une douille de guidage (2) disposée radialement à l'intérieur, un espace de pression annulaire (5) auquel conduit un alésage d'alimentation (6) à travers le boîtier (1), un piston commandé par fluide sous pression (7) étant supporté de manière déplaçable axialement dans l'espace de pression (5), lequel est en liaison fonctionnelle avec un palier de débrayage (8) qui sollicite avec une force une rondelle-ressort de l'embrayage à friction dans la direction axiale, un joint d'étanchéité étant disposé entre le boîtier (1) et la douille de guidage (4) dans une rainure annulaire (N), une première partie de la rainure (N) étant réalisée par le boîtier (1) et une deuxième partie de la rainure (N) étant réalisée par un composant de support (2), **caractérisé en ce que** la rainure (N) est réalisée en forme de U et présente deux régions de paroi essentiellement parallèles (N1, N3) qui s'étendent radialement et entre lesquelles est disposée une région de fond (N2) s'étendant axialement, une première région de paroi (N1) étant formée par le composant de support (2), et la région de fond (N2) et une deuxième région de paroi (N3) étant formées par le boîtier (1).

2. Système de débrayage selon la revendication 1, **caractérisé en ce que** le boîtier (1) et le composant de support (2) sont fabriqués en plastique.

3. Système de débrayage selon l'une quelconque des revendications 1 ou 2, **caractérisé en ce que** le composant de support (2) est disposé au niveau de l'extrémité opposée au palier de débrayage (8) entre la douille de guidage (4) et le boîtier (1).

4. Système de débrayage selon l'une quelconque des revendications 1 à 3, **caractérisé en ce que** le composant de support (2) est connecté par le biais d'une connexion par engagement par correspondance de formes ou par force ou par liaison de matière au boîtier (1) ou à la douille de guidage (4) ou est surmoulé sur le boîtier (1).

5. Système de débrayage selon la revendication 4, **caractérisé en ce que** la connexion par engagement par correspondance de formes est réalisée sous forme de liaison par enclipsage, la connexion par engagement par correspondance de formes est réalisée sous forme d'ajustement serré et la connexion par liaison de matière est réalisée sous forme de connexion par soudage à ultrasons.

6. Système de débrayage selon l'une quelconque des revendications 1 à 5, **caractérisé en ce que** l'alésage d'alimentation (6) conduit à l'espace de pression (5) du boîtier (1), avec la région de fond (N2) s'étendant axialement de la rainure (N) chevauchant celui-ci radialement à l'intérieur.

7. Système de débrayage selon l'une quelconque des revendications précédentes, **caractérisé en ce que** le composant de support (2) est en forme de coude.

8. Système de débrayage selon l'une quelconque des revendications précédentes, **caractérisé en ce que** le composant de support (2) présente deux diamètres extérieurs différents (D2.1, D2.2) qui correspondent avec des diamètres intérieurs du boîtier (1).

9. Système de débrayage selon l'une quelconque des revendications précédentes, **caractérisé en ce que** le joint d'étanchéité (3) est un joint torique.

10. Système de débrayage selon la revendication 9, **caractérisé en ce que** l'alésage d'alimentation (6) débouche dans la direction axiale à la hauteur du joint torique (3) et de manière décalée radialement vers l'extérieur par rapport à celui-ci dans l'espace de pression (5).
